# EUROPÄISCHE PATENTSCHRIFT

(11) **EP 1 717 386 B1**
(45) Veröffentlichungstag und Bekanntmachung des Hinweises auf die Patenterteilung: **14.07.2010**
(21) Anmeldenummer: 06008185.8
(22) Anmeldetag: 20.04.2006
(51) Int. Cl.: E04F 15/02, E04F 15/024, B29C 45/00, B29C 45/72

(54) **Fussbodenelement**
Flooring element
Elément de plancher

(30) Priorität: 26.04.2005 DE 102005019638
(43) Veröffentlichungstag der Anmeldung: 02.11.2006
(73) Patentinhaber: Flooring Technologies Ltd., Portico Building Marina Street Pieta MSD 08 (MT)
(72) Erfinder:
(74) Vertreter: Rehmann, Thorsten

(56) Entgegenhaltungen:
- EP-A- 1 400 640
- WO-A-03/040491
- US-A- 5 323 575
- PATENT ABSTRACTS OF JAPAN Bd. 2000, Nr. 11, 3. Januar 2001 (2001-01-03) & JP 2000 230310 A (SEKISUI CHEM CO LTD), 22. August 2000 (2000-08-22)

## Beschreibung

Die Erfindung betrifft ein Fußbodenelement, dass einen einteiligen, umlaufend geschlossenen, aus einer Mehrzahl von Rahmenleisten gebildeten Rahmen umfasst, der mindestens eine zwischen zwei Rahmenleisten verlaufende und gegenüber den Rahmenleisten zurückspringende Strebe zur Abstützung einer in den Rahmen eingelegten Platte aufweist, wobei die Höhe H zwischen Strebe und dem oberen Rand der Rahmenleisten maximal der Dicke D der Platte entspricht, wobei Verbindungsmittel an den Außenseiten der Rahmenleisten angeformt sind und der Rahmen Ausnehmungen zur Aufnahme der Verbindungsmittel aufweist.

Ein solches Fußbodenelement ist beispielsweise aus der US 5,323,575 bekannt. Der bekannte Rahmen besteht aus vier quadratischen Feldern, in die eine Fliese eingelegt werden kann. Jedes Feld ist mit vier vertikal ausgerichteten Stiften versehen, die in Bohrungen in der Fliese eingreifen um ein Verrutschen einzelner Platten parallel zum Fußboden zur verhindern.

Aus der Praxis sind außerdem Bodenelemente bekannt, die aus einer tragenden Unterkonstruktion aus Stütz- oder Stellfüßen bestehen, die auf dem Rohboden verklebt werden und zum Ausgleich von Unebenheiten des Rohbodens höhenverstellbar sind. Auf diese Unterkonstruktion werden geeignete Bodenplatten aus Holzwerkstoffen oder faserverstärkten Mineralstoffen ohne zusätzliche Befestigungsmittel aufgelegt und bilden einen so genannten Doppelboden. Ein weiteres Doppelbodensystem des Standes der Technik besteht aus einer Unterkonstruktion aus Stellfüßen, in die Traversen aus Holzwerkstoff oder Metall eingelegt werden, so dass ein Tragrahmen ausgebildet wird. Auf diesen Tragrahmen werden Bodenplatten aus Holz oder Holzwerkstoffen aufgelegt. Solche Bodenelemente werden vorwiegend im Messebau und im Gewerbebau eingesetzt. Aber auch im privaten Bereich finden solche Bodenelemente beispielsweise bei der Erstellung von Terrassenböden im Gartenbereich Anwendung.

Aus der EP 1 400 640 A1 ist bekannt, in eine beispielsweise aus Holz bestehende Unterkonstruktion ein Gitter aus einem Kunststoff einzulegen. Die Kunststoffgitter sind in Segmente unterteilt, in die dann die zu verlegenden Platten eingelegt werden können.

Aus der WO 03/040491 A1 ist ein Verlegesystem für Bodenplatten bekannt, bei dem die zu verlegenden Bodenplatten in Kunststoffauflagerahmen eingelegt werden. Diese Rahmen sind untereinander über Steckprofile verbindbar.

Problematisch an den bekannten Bodenelementen ist, dass die Platte von Hand auf der Unterkonstruktion verlegt werden muss. Zudem ist das Aufstellen und Ausrichten der Vielzahl von Stellfüßen sehr zeitaufwendig, da diese in einem bestimmen Rasterabstand aufgestellt werden müssen. Nachteilig an dieser Art der Fußbodenkonstruktion ist zudem, dass die Platten erst am Montageort auf die Unterkonstruktion aufgelegt werden können und es bei der Transport und Verlegung zu Beschädigungen, z.B. zu Kantenausbrüchen oder -abplatzungen, an den Platten kommen kann, so dass die Platten unbrauchbar werden. Dies resultiert in einem hohen Verlustanteil bei den Platten.

Von dieser Problemstellung ausgehend soll ein Bodenelement geschaffen werden, das einfacher und kostengünstiger herzustellen ist sowie einen verbesserten Kantenschutz der Platte aufweist und eine einfache Erstellung eines Fußbodens ermöglicht. Zudem sollen die Bodenelemente einfach und sicher insbesondere bei geringer Höhe der Bodenelemente miteinander verbindbar sein.

Zur Problemlösung zeichnet sich ein gattungsgemäßes Fußbodenelement dadurch aus, dass die Platte kraftschlüssig mit den Rahmenleisten verbunden ist, dass der Rahmen Schlitzförmige Ausnehmungen zur Aufnahme der Verbindungsmittel aufweist, und dass die Platte mindestens an den den schlitzförmigen Ausnehmungen zugewandten Seiten einen Falz oder eine Fase aufweist und das Eingreifen der Verbindungsmittel in die schlitzförmigen Ausnehmungen ermöglicht.

Um eine Mehrzahl von Fußbodenelementen zu einem Fußboden auf einfache Weise verbinden zu können, sind an den Außenseiten zweier Rahmenleisten Verbindungsmittel angeformt, die in schlitzförmige Ausnehmungen des nächsten Fußbodenelementes eingreifen. Durch diese Art der Verbindung mehrerer Fußbodenelemente untereinander kann die Verlegegeschwindigkeit der Fußbodenelemente bei der Erstellung eines Fußbodens deutlich erhöht werden. Die Verbindungsmittel fixieren die Fußbodenelemente in Horizontal- und in Vertikalrichtung, so dass ein Verschieben der verlegten Fußbodenelemente untereinander nicht mehr möglich ist und ein ebener Fußboden ohne störende Spalten erzeugt werden kann. Vorteilhafterweise sind die Verbindungsmittel einteilig mit dem Rahmen ausgebildet und an die Außenseiten der Rahmenleisten angeformt.

Damit die Verbindungsmittel in die schlitzförmigen Ausnehmungen eingreifen können, ist an den den schlitzförmigen Ausnehmungen zugewandten Seiten der Platte ein Falz oder eine Fase angefräst. Auf diese Weise wird sichergestellt, dass das Verbindungsmittel nicht gegen die Unterseite der Platte drückt. Ebenso ist es möglich, Fase oder Falz umlaufend an die Platte anzuformen. Zur Ausbildung einer sicheren Verbindung zweier Bodenelemente sind die Verbindungsmittel im Querschnitt hakenförmig ausgebildet. Hierdurch wird ein sicheres und festes Eingreifen der Verbindungsmittel in die schlitzförmigen Ausnehmungen des Rahmens des nächsten Bodenelementes ermöglicht.

Befestigungsmittel wie Schrauben, Nägel oder Klammern zur Befestigung der Platte im Rahmen nicht mehr notwendig, da die Platte kraftschlüssig mit dem Rahmen verbunden wird. Zudem ist die Platte, dadurch, dass sie in einen Rahmen eingelegt ist, an ihren Kantenbereichen vor Ausbruch oder sonstigen Beschädigungen geschützt. Durch die Ausbildung der zurückspringenden Streben wird die Platte zusätzlich gegen ein Herausfallen aus dem Rahmen geschützt. Weiterhin können die Streben zur Unterstützung der Platte, vor allem bei großformatigen Bodenelementen verwendet werden, so dass auch Platten mit geringen Dicken für den Einsatz im Fußbodenelement geeignet sind, ohne dass die Platte bricht.

Vorteilhafterweise sind die Streben einteilig mit dem Rahmen ausgebildet, so dass eine besonders günstige und schnelle Herstellung des Rahmens sowie des Fußbodenelementes ermöglicht wird. Durch die Anordnung einer Mehrzahl quer zu der mindestens einen Strebe verlaufender Streben werden auch großformatige Fußbodenelemente aus Platten mit geringen Dicken möglich, da die Streben die Platte abstützen und einem Durchbiegen oder Brechen der Platte entgegenwirken. Es hat sich gezeigt, dass es besonders vorteilhaft ist, wenn die quer verlaufenden Streben einteilig mit dem Rahmen ausgebildet werden, da auf diese Weise eine einfache und schnelle Herstellung des Bodenelementes möglich ist. Zusätzlich wird durch die Unterstützung der Platte die Schwingungsneigung der Platte verringert.

Um unterhalb der Fußbodenelemente Installationsleitungen, z. B. Elektro- und/oder Heizungsleitungen, verlegen zu können, wird der Rahmen von einer Mehrzahl von Füßen getragen, die einen ausreichenden Abstand zum Rohfußboden schaffen. Zur Verringerung des Montageaufwandes der Bodenelemente können die Füße einteilig mit dem Rahmen ausgebildet werden.

Rahmen, Streben und Füße bestehen aus Kunststoff, Metall oder Metalllegierungen, da diese Werkstoffe gute Festigkeitseigenschaften besitzen und eine stabile Ausgestaltung des Fußbodenelementes gewährleisten. Besonders Polypropylen ist für die kostengünstige Produktion der Bodenelemente geeignet. Ais Platten eignen sich insbesondere Holz- oder Holzwerkstoffplatten, z.B. OSB-Platten, HDF- oder MDF-Platten, Spanplatten, Laminatpaneele und Sperrholzplatten, Glasplatten oder Kunststoffplatten, z.B. Plexiglasplatten oder Metallplatten wie z. B. so genannte Aluminiumriffelplatten. Durch das Einlegen verschiedenster Plattenarten kann für individuelle optische und spezielle konstruktive Anforderungen, z.B. Brandschutz- oder Schallschutzanforderungen, eine geeignete Platte ausgewählt werden.
An den Innenseiten der Rahmenleisten können Vorsprünge ausgebildet werden, die in Ausnehmungen der Platte eingreifen und so Platte und Rahmen formschlüssig miteinander verbinden, so dass die Stabilität und Belastbarkeit des Fußbodenelementes noch weiter erhöht werden können. Die Vorsprünge können eine im Querschnitt halbrunde oder halbovale Form aufweisen, um das Einlegen der Platte in den Rahmen zu erleichtern.

Soll die Stabilität und Belastbarkeit des Fußbodenelementes noch weiter erhöht werden, ist es sinnvoll, die Plattenkanten mit den Innenseiten der Rahmenleisten zu verkleben. Vorzugsweise wird hierzu ein Polyurethanleim verwendet.

Um die Durchführung von Installationsleitungen, beispielsweise Elektro- und/oder Heizungsleitungen zu vereinfachen, können die Seiten der Füße des Bodenelements abgeschrägt sein.

Damit das Verletzungsrisiko für den Verarbeiter bei der Verlegung der Fußbodenelemente minimiert wird, ist an den Oberkanten der Außenseiten der Rahmenleisten eine Rundung vorgesehen.

Zur Erhöhung der Schall- und Wärmedämmeigenschaften des Fußbodenelementes kann unterhalb von Rahmen und Platte ein Dämmstoff angeordnet werden.

Wird der Rahmen umlaufend mit schlitzförmigen Ausnehmungen versehen, können separate im Querschnitt U-förmige Verbindungsmittel (Bügel) eingesetzt werden, die sich beim Verlegen von mehreren Fußbodenelementen über die Bügel in die gegenüberliegenden schlitzförmigen Ausnehmungen einstecken lassen, um zwei Fußbodenelemente miteinander zu verbinden.

Das Verfahren zur Herstellung eines Fußbodenelements aus einem Rahmen und einer Platte sieht vor, dass der Rahmen im heißen Zustand aus der Spritzgussmaschine genommen wird und eine Platte aus Holz, Holzwerkstoff, Metall, Glas oder Kunststoff in den heißen Rahmen eingelegt wird. Als Holzwerkstoffplatten können hierbei beispielsweise OSB-Platten, MDF-Platten, HDF-Platten, Spanplatten, Laminatpaneele oder Sperrholzplatten eingesetzt werden. Es können aber je nach Anforderung an den zu ersteilenden Fußboden auch Metallplatten, Glasplatten oder Kunststoffplatten, z.B. Plexiglasplatten, in den heißen Rahmen eingelegt werden.

Durch das Abkühlen des Rahmens nach der Entnahme aus der Spritzgussmaschine beginnt der Rahmen zu schwinden, so dass die eingelegte Platte kraftschlüssig im Rahmen eingespannt wird. Durch dieses thermisch induzierte Ineinanderpassen von Rahmen und Platte ist eine zusätzliche Verleimung, Verschraubung, Vernagelung oder Verklammerung von Rahmen und Platte nicht notwendig und Produktions- und Verarbeitungskosten werden gesenkt. Zudem werden die Kantenbereiche der Platten durch das Rahmenmaterial geschützt und das Risiko, dass bei Transport und Verlegung Kantenausbrüche oder sonstige Beschädigungen an den Plattenkanten auftreten, wird vermindert.

Vorteilhafterweise erfolgt das Spritzgießen des Rahmens in einer Spritzgussmaschine bei einer Temperatur von 200 - 300°C und einem Druck von 80 - 350 Tonnen bei einer Dauer von bis zu 20 Sekunden. Durch diese Parameter wird eine gute Verarbeitbarkeit des thermoplastischen Kunststoffmaterials erreicht, so dass eine einfache Formgebung in der Spritzgussmaschine erfolgen kann. Der Rahmen verbleibt nach dem eigentlichen Gussvorgang noch für etwa 15 - 45 Sekunden in der Spritzgussmaschine und kühlt hier bereits auf etwa 55 - 75 °C ab. Dann wird der Rahmen aus einer Gussform in der Spritzgussmaschine entnommen, um die Platte in diesen einzulegen. Bei seiner Abkühlung auf Raumtemperatur bzw. Eine entsprechend gewählte Umgebungstemperatur schrumpft der Rahmen und wird mit seinen Innenseiten an die aufgenommene Platte gepresst. Vorteilhafterweise können Rahmen und Streben in der Spritzgussmaschine einteilig ausgebildet werden, damit die Platte beim Einlegen in die noch warme Gussform nicht aus dem Rahmen herausfällt und schon während der Abkühlungszeit durch die Streben gestützt wird. Weiterhin ist es sinnvoll, dass neben Rahmenleisten und Streben auch die Füße einteilig mit dem Rahmen ausgebildet werden, damit eine Unterkonstruktion für die spätere Verlegung der Bodenelemente zu einem Fußboden nicht mehr notwendig ist.

Vorteilhafterweise können die Verbindungsmittel, die zum Verbinden mindestens zweier Bodenelemente notwendig sind, gleich im Gussvorgang mit dem Rahmen einteilig ausgebildet werden, so dass bei der Verlegung der Fußbodenelemente keine zusätzlichen Verbindungsmittel wie Schrauben, Nägel, Klammem mehr erforderlich sind und der Verlegeaufwand deutlich verkürzt werden kann.

Werden die erfindungsgemäßen Fußbodenelemente unter gegenseitiger Verbindung zur Erzeugung eines Bodenbelages auf einen unebenen Untergrund, etwa einer Wiese oder Erdboden benutzt, so können an der Rahmenunterseite höhenverstellbare Stützfüße vorgesehen sein. Diese können in Öffnungen eingesetzt sein, die beim Spritzguss gebildet werden. Femer kann es dann zur vertikalen Fixierung der Fußbodenelemente eines Bodenbelags vorgesehen sein, jeweils benachbarte Fußbodenelemente zusätzlich mit clip- oder klemmenartigen Elementen zu verbinden. Dazu weist der Rahmen des auf unebenem Grund einzusetzenden Fußbodenelementes an seinen Außenseiten Ausnehmungen oder Öffnungen auf.

Mit Hilfe einer Zeichnung sollen Ausführungsbeispiele der Erfindung nachfolgend näher erläutert werden. Es zeigt:
- Figur 1 -: eine perspektivische Ansicht des Bodenelements;
- Figur 2 -: eine perspektivische Ansicht des Rahmens;
- Figur 3 -: einen Querschnitt durch Rahmen und Verbindungsmittel;
- Figur 4 -: einen Querschnitt durch Rahmen und die schlitzförmige Ausnehmung;
- Figur 5 -: eine Draufsicht auf den Rahmen;
- Figur 6 -: einen Querschnitt des Rahmens entlang der Linie B - B aus Figur 5 und
- Figur 7 -: einen Querschnitt des Rahmens entlang der Linie A - A aus Figur 5.

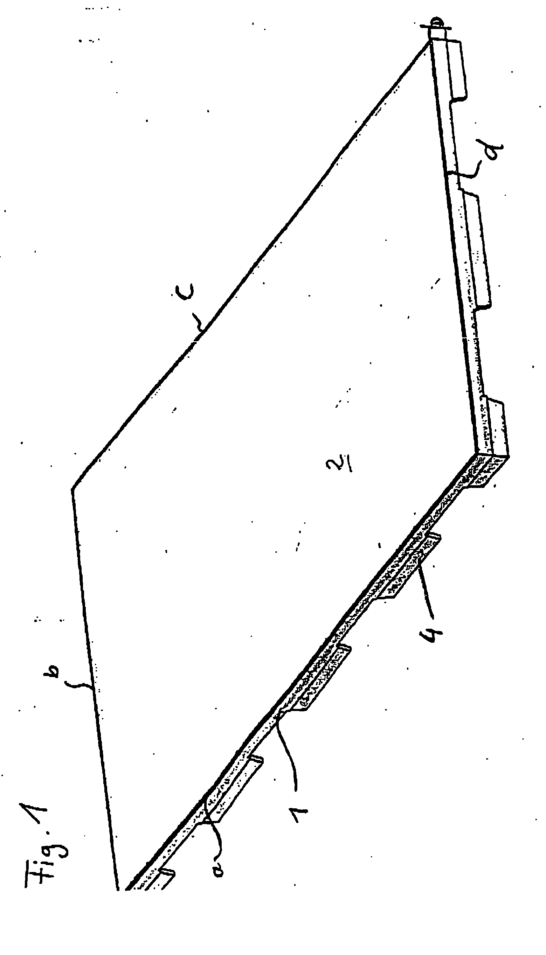

Figur 1 zeigt ein erfindungsgemäßes Bodenelement mit einem Rahmen 1, in den eine Platte 2 eingelegt ist. Damit beispielsweise unterhalb des Bodenelementes Installationsleitungen verlegt werden können, weist der Rahmen 1 an einer Unterseite eine Mehrzahl von Füßen 4 auf. Der Rahmen 1 besteht aus Polypropylen, das in einer Spritzgussmaschine bei einer Temperatur von 200 - 300°C und einem Druck von 80 - 350 Tonnen und einer Gusszeit im 20 Sekundenbereich hergestellt wird. Nach dem eigentlichen Gussvorgang verbleibt der Rahmen für etwa 15 - 45 Sekunden in einer Gussform in der Spritzgussmaschine, wobei er von der während des Gießens herrschenden Temperatur auf etwa 55 - 75°C abkühlt. Der Rahmen wird der Spritzgussmaschine dann entnommen. In den noch 55 - 75°C heißen Rahmen wird die Platte 2 eingelegt. Durch die Abkühlung des Rahmens 1 auf eine Umgebungstemperatur von ca. 20 °C beginnt der Rahmen 1 zu schwinden, so dass die Platte 2 kraftschlüssig im Rahmen 1 eingespannt ist.

Der Rahmen 1 bzw. Die Rahmenleisten 1a, 1b, 1c, 1 d sind im Querschnitt L-förmig ausgebildet, wobei der Rahmen 1 grundsätzlich in jeder polygonalen Form (quadratisch, rechteckig, wabenförmig oder dreieckig) ausgebildet sein kann

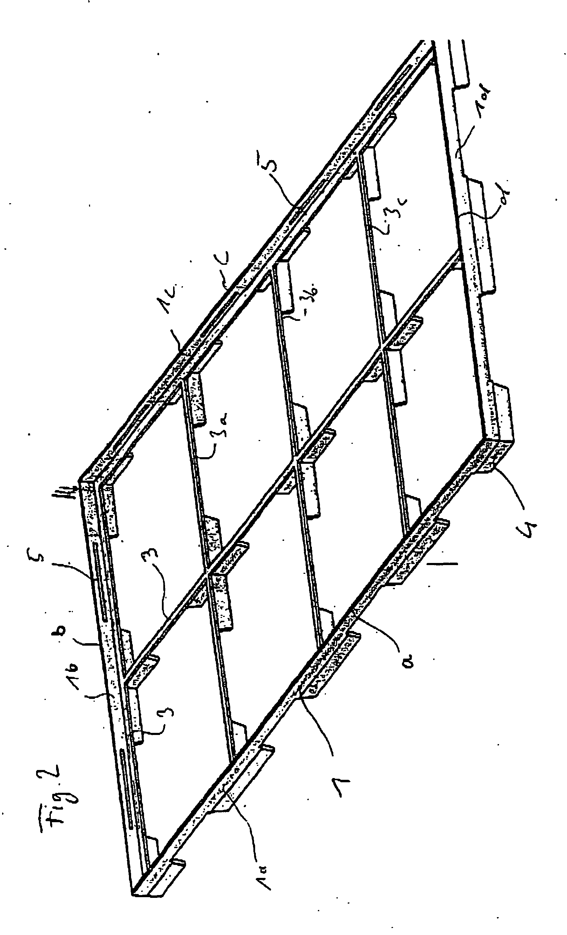

Figur 2 zeigt die perspektivische Ansicht des Rahmens 1, der aus einer Mehrzahl von Rahmenleisten 1 a, 1b, 1 c und 1 d gebildet wird und umlaufend geschlossen ist. Zwischen den Rahmenleisten 1b und 1 d sowie 1 a und 1c verlaufen Streben 3, die gegenüber den Rahmenleisten 1b und 1 d sowie 1a und 1c zurückspringen, um die Platte 2, die in den Rahmen 1 eingelegt worden ist, abzustützen. In Figur 2 ist weiterhin gezeigt, dass der Rahmen 1 eine Mehrzahl parallel verlaufender Streben 3a, 3b, 3c aufweist, um die einzulegende Platte 2 an möglichst vielen Punkten zu unterstützen. Die Streben 3, 3a, 3b, 3c sind einteilig mit dem Rahmen 1 ausgebildet und weisen eine Mehrzahl von Füßen 4 auf, die vorzugsweise einteilig mit den Streben 3, 3a, 3b, 3c ausgebildet sind, auf. Die Höhe H zwischen der Strebe 3 und dem oberen Rand a, b, c und d der Rahmenleisten 1 a, 1b, 1 c und 1 d ist so bemessen, dass sie der Dicke D der Platte 2 entspricht. An den Innenseiten der Rahmenleisten 1 a, 1 b, 1 c und 1d sind eine Mehrzahl von im Querschnitt halbovalen Vorsprüngen 5 ausgebildet, die in Ausnehmungen der Platte 2 eingreifen, um die Platte im Rahmen 1 auch formschlüssig zu fixieren.

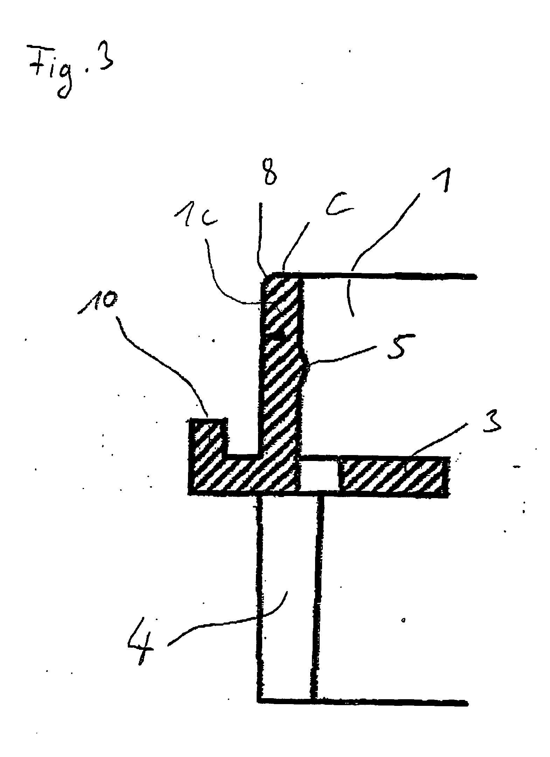

Die Figur 3 zeigt einen Schnitt durch den Rahmen 1, bei dem ein hakenförmiges Verbindungsmittel 10 im Querschnitt dargestellt ist. Der Rahmen 1 weist an der Rahmenleiste 1 c den Vorsprung 5 sowie an der Oberkante c der Rahmenleiste 1c eine Rundung 8 auf.

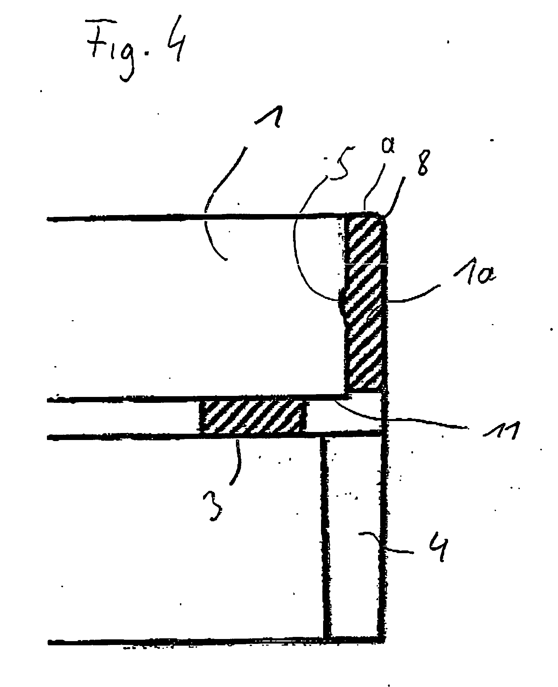

In Figur 4 ist die zu dem hakenförmigen Befestigungselement 10 korrespondierende schlitzförmige Ausnehmung 11 des Rahmes 1 gezeigt. Die Rahmenleiste 1 a weist an ihrer Innenseite einen Vorsprung 5, sowie an ihrer Oberkante a eine nach außen gerichtete Rundung auf.

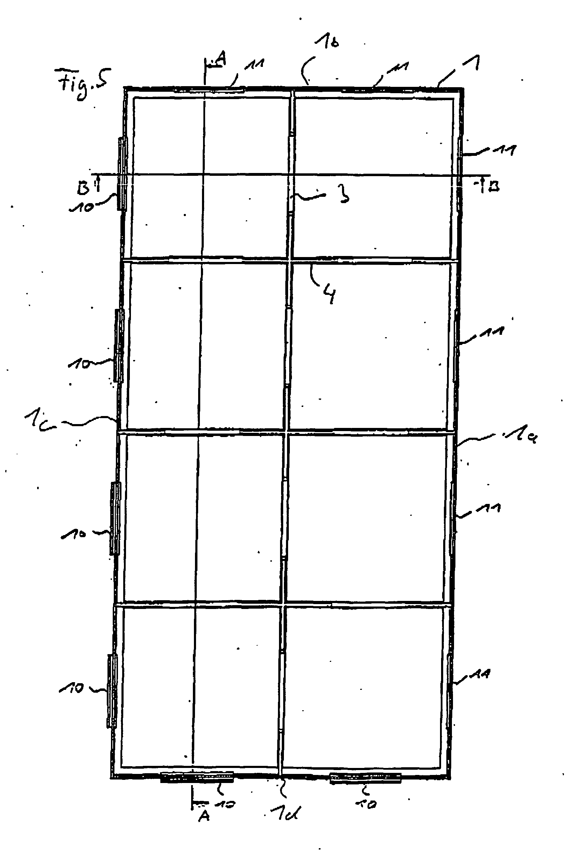

Figur 5 zeigt eine Draufsicht auf das erfindungsgemäße Bodenelement, bei der zueinander korrespondierende Verbindungsmittel 10 und schlitzförmige Ausnehmungen 11 dargestellt sind. Die hakenförmigen Verbindungsmittel 10 sind an zwei Rahmenleisten 1c und 1d vorgesehen und einteilig mit dem Rahmen 1 ausgeführt. An den jeweils gegenüberliegenden Seiten 1 a und 1b sind die korrespondierenden schlitzförmigen Ausnehmungen 11, in die die hakenförmigen Verbindungselemente 10 eingreifen, dargestellt.

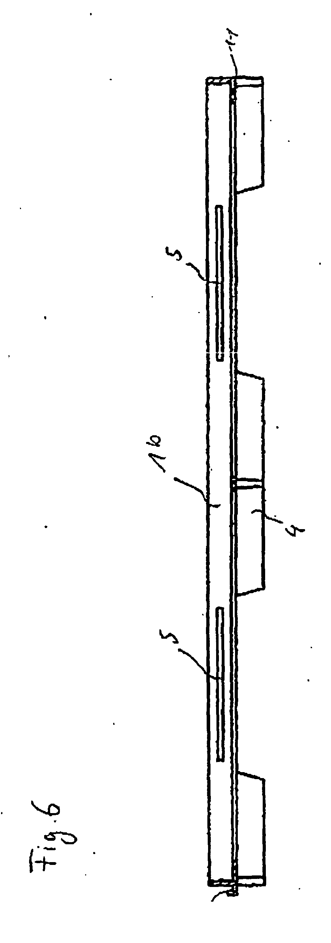

Figur 6 zeigt einen Schnitt durch den Rahmen 1 entlang der Linie B - B aus Figur 5. Das dargestellte hakenförmige Verbindungselement 10 kann in die korrespondierende, schlitzförmige Ausnehmung 11 eines nächsten Bodenelementes eingreifen. Weiterhin sind in dieser Figur die Vorsprünge 5, die an der Innenseite der Rahmenleiste 1 b ausgebildet sind, dargestellt.

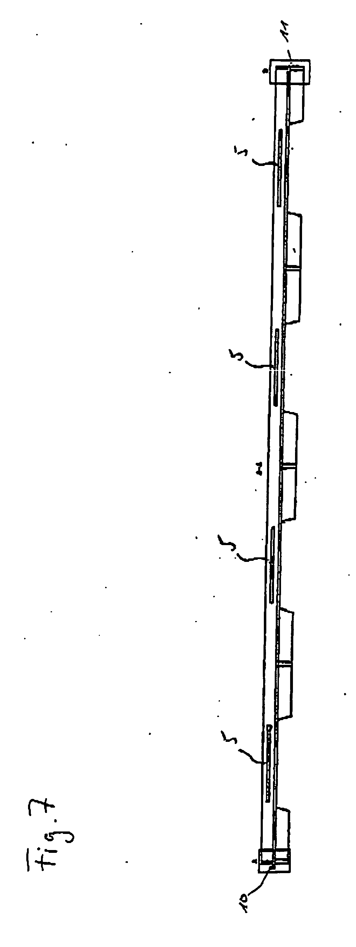

Figur 7 zeigt einen Schnitt durch den Rahmen 1 entlang der Linie A - A aus Figur 5 mit den bereits bei Figur 6 beschriebenen Verbindungsmitteln 10 sowie der schlitzförmigen Ausnehmung 11 und den Vorsprüngen 5.

### Bezugszeichenliste:

- 1 -: Rahmen
- 1a -: Rahmenleiste
- 1b -: Rahmenleiste
- 1c -: Rahmenleiste
- 1d -: Rahmenleiste
- 2 -: Platte
- 3 -: Streben
- 3a -: Strebe
- 3b -: Strebe
- 3c -: Strebe
- 4 -: Fuß
- 5 -: Vorsprung
- 10 -: Verbindungsmittel
- 11 -: Ausnehmung
- a -: Oberkante
- b -: Oberkante
- c -: Oberkante
- d -: Oberkante
- D -: Plattendicke
- H -: Höhe

## Patentansprüche

1. Fußbodenelement, das einen einteiligen, umlaufend geschlossenen, aus einer Mehrzahl von Rahmenleisten (1a, 1b, 1c, 1d) gebildeten Rahmen (1) umfasst, der mindestens eine zwischen zwei Rahmenleisten (1b, 1d) verlaufende und gegenüber den Rahmenleisten (1b, 1d) zurück springende Strebe (3) zur Abstützung einer in den Rahmen (1) eingelegten Platte (2) aufweist, wobei die Höhe H zwischen Strebe (3) und dem oberen Rand (a, b, c, d) der Rahmenleisten (1a, 1b, 1c, 1d) maximal der Dicke D der Platte (2) entspricht, wobei Verbindungsmittel (10) an den Außenseiten der Rahmenleisten (1b, 1c) angeformt sind, **dadurch gekennzeichnet, dass** die Platte (2) kraftschlüssig mit den Rahmenleisten (1a, 1b, 1c, 1d) verbunden ist dass der Rahmen (1) schlitzförmige Ausnehmungen (11) zur Aufnahme der Verbindungsmittel (10) aufweist, und dass die Platte (2) mindestens an den den schlitzförmigen Ausnehrnungen (11) zugewandten Seiten einen Falz oder eine Fase aufweist und das Eingreifen der Verbindungsmittel (10) in die schlitzförmigen Ausnehmungen (11) ermöglicht.

2. Fußbodenelement nach Anspruch 1, **dadurch gekennzeichnet, dass** die mindestens eine Strebe (3) einteilig mit dem Rahmen (1) ausgebildet ist.

3. Fußbodenelement nach Anspruch 1 oder 2, **gekennzeichnet durch**, eine Mehrzahl zu der mindestens einen Strebe (3) quer verlaufenden Streben (3a, 3b, 3c).

4. Fußbodenelement nach Anspruch 3, **dadurch gekennzeichnet, dass** die quer verlaufenden Streben (3a, 3b, 3c) einteilig mit dem Rahmen (1) ausgebildet sind.

5. Fußbodenelement nach einem der vorstehenden Ansprüche, **dadurch gekennzeichnet, dass** der Rahmen (1) eine Mehrzahl einteilig mit dem Rahmen (1) ausgebildeter Füße (4) aufweist.

6. Fußbodenelement nach Anspruch 5, **dadurch gekennzeichnet, dass** Rahmen (1) und Streben (3) und Füße (4) aus Kunststoff, Metall oder einer Metalllegierung bestehen.

7. Fußbodenelement nach einem oder mehreren der Ansprüche 1 bis 6, **dadurch gekennzeichnet, dass** an den Innenseiten der Rahmenleisten (1a, 1b 1c, 1d) Vorsprünge (5) ausgebildet sind, die in Ausnehmungen der Platte (2) eingreifen und Platte (2) und Rahmen (1) formschlüssig miteinander verbinden.

8. Fußbodenelement nach Anspruch 1, **dadurch gekennzeichnet, dass** die Verbindungsmittel (10) im Querschnitt hakenförmig ausgebildet sind.

9. Fußbodenelement nach einem oder mehreren der voranstehenden Ansprüche, **dadurch gekennzeichnet, dass** die Innenseiten der Rahmenleisten (1a, 1b, 1c, 1d) mit der Platte (2) verklebt sind.

10. Fußbodenelement nach Anspruch 5, **dadurch gekennzeichnet, dass** die Füße (4) an mindestens einer Seite abgeschrägt sind.

11. Fußbodenelement nach einem oder mehreren der vorstehenden Ansprüche, **dadurch gekennzeichnet, dass** die Außenseiten der Rahmenleisten (1a, 1b, 1c, 1d) an ihren Oberkanten (a, b, c, d) abgerundet sind.

12. Fußbodenelement nach einem oder mehreren der vorstehenden Ansprüche, **dadurch gekennzeichnet, dass** unterhalb von Rahmen (1) und Platte (2) ein Dämmstoff angeordnet ist.

## Claims

1. Flooring element, which comprises a one-piece, peripherally closed frame (1), which is formed from a plurality of frame strips (1a, 1b, 1c, 1d) and has at least one strut (3), which is set back relative to the frame strips (1b, 1d) and extends between two frame strips (1b, 1d), to support a panel (2) inserted in the frame (1), wherein the height H between the strut (3) and the upper edge (a, b, c, d) of the frame strips (1a, 1b, 1c, 1d) corresponds at a maximum to the thickness D of the panel (2), connecting means (10) being formed on the outsides of the frame strips (1b, 1c), **characterised in that** the panel (2) is non-positivefy connected to the frame strips (1a, 1b, 1 c, 1d), **in that** the frame (1) has slot-shaped recesses (11) to receive the connecting means (10), and **in that** the panel (2) has a fold or a bevel at least on the sides facing the slot-shaped recesses (11) and makes it possible for the connecting means (10) to engage in the slot-shaped recesses (11).

2. Flooring element according to claim 1, **characterised in that** the at least one strut (3) is formed in one piece with the frame (1).

3. Flooring element according to claim 1 or 2, **characterised by** a plurality of struts (3a, 3b, 3c) extending transversely to the at least one strut (3).

4. Flooring element according to claim 3, **characterised in that** the struts (3a, 3b, 3c) extending transversely are formed in one piece with the frame (1).

5. Flooring element according to any one of the preceding claims, **characterised in that** the frame has a plurality of feet (4) formed in one piece with the frame (1).

6. Flooring element according to claim 5, **characterised in that** the frame (1) and struts (3) and feet (4) consist of plastics material, metal, or a metal alloy.

7. Flooring element according to any one or more of claims 1 to 6, **characterised in that** projections (5), which engage in recesses of the panel (2) and positively connect the panel (2) and frame (1) to one another, are formed on the insides of the frame strips (1a, 1b, 1c, 1d).

8. Flooring element according to claim 1, **characterised in that** the connecting means (10) are hook-shaped in cross section.

9. Flooring element according to any one or more of the preceding claims, **characterised in that** the insides of the frame strips (1 a, 1b, 1 c, 1 d) are glued to the panel (2).

10. Flooring element according to claim 5, **characterised in that** the feet (4) are bevelled on at least one side.

11. Flooring element according to any one or more of the preceding claims, **characterised in that** the outsides of the frame strips (1a, 1b, 1c, 1 d) are rounded at their upper edges (a, b, c, d).

12. Flooring element according to any one or more of the preceding claims, **characterised in that** an insulating material is arranged below the frame (1) and panel (2).

## Revendications

1. Elément de plancher comprenant un cadre (1) ferrré, d'un seul tenant formé de plusieurs baguettes d'encadrement (1a, 1b, 1c, 1d) qui présente pour l'appui d'un panneau (2) engagé dans le cadre (1), au moins une entretoise (3) s'étendant entre deux baguettes d'encadrement (1b, 1d) et exerçant un rappel élastique par rapport aux baguettes d'encadrement (1b, 1d), la hauteur H entre entretoise (3) et le bord supérieur (a, b, c, d) des baguettes d'encadrement (1a, 1b, 1c, 1d) correspondant au maximum à l'épaisseur D du panneau (2), des moyens de liaison (10) étant formés sur les côtés extérieurs des baguettes d'encac rement (1b, 1c), **caractérisé en ce que** 1e panneau (2) est relié aux baguettes d'encadrement (1a, 1b, 1c, 1d) par force, **en ce que** le cadre (1) présente des évidements (11) en forme de fente pour recevoir les moyens de liaison (10), et **en ce que** le panneau (2) présente au moins sur les côtés tournés vers les évidements (11) en forme de fente une pliure ou un chanfrein et permet que les moyens de liaison (10) viennent en prise dans les évidements (11) en forme de fente.

2. Elément de plancher selon la revendication 1, **caractérisé en ce que** l'au moins une entretoise (3) est formée d'un seul tenant avec le cadre (1).

3. Elément de plancher selon la revendication 1 ou 2, **caractérisé par** plusieurs entretoises (3a, 3b, 3c) s'étendant transversalement à l'au moins une entretoise (3).

4. Elément de plancher selon la revendication 3, **caractérisé en ce que** les entretoises (3a, 3b, 3c) s'étendant transversalement sont formées d'un seul tenant avec le cadre (1).

5. Elément de plancher selon l'une des revendications précédentes, **caractérisé en ce que** le cadre (1) présente plusieurs pieds (4) formés d'un seul tenant avec le cadre (1).

6. Elément de plancher selon la revendication 5, **caractérisé en ce que** cadre (1), entretoise (3) et pieds (4) consistent en de la matière synthétique, du métal ou un alliage de étaux.

7. Elément de plancher selon l'une ou plusieurs des revendications 1 à 6, **caractérisé en ce que** sur les côtés intérieurs des baguettes d'encadrement (1a, 1b, 1c, 1d) sont formées des saillies (5) qui viennent en prise dans des évidements du panneau (2) et relient ensemble par enclenchement panneau (2) et cadre (1).

8. Elément de plancher selon la revendication 1, **caractérisé en ce que** les moyens de liaison (10) sont formés avec une coupe transversale en forme de crochet.

9. Elément de plancher selon l'une ou plusieurs des revendications précédentes, **caractérisé en ce que** les côtés intérieurs des baguettes d'encadrement (1a, 1b, 1c, 1d) sont collés avec le panneau (2).

10. Elément de plancher selon la revendication 5, **caractérisé en ce que** les pieds (4) sont chanfreinés sur au moins un côté.

11. Elément de plancher selon l'une ou plusieurs des revendications précédentes, **caractérisé en ce que** les côtés extérieurs des baguettes d'encadrement (1a, 1b, 1c, 1d) sont arrondis sur leurs arêtes supérieures (a, b, c, d).

12. Elément de plancher selon l'une ou plusieurs des revendications précédentes, **caractérisé en ce qu'**un matériau isolant est agencé sous le cadre (1) et le panneau (2).
